# EUROPEAN PATENT APPLICATION

(11) **EP 4 170 609 A1**
(43) Date of publication of application: **26.04.2023**
(21) Application number: 21203858.2
(22) Date of filing: 21.10.2021
(51) Int. Cl.: G06V 40/20, H04N 7/15

(54) **AUTOMATED FILTER SELECTION FOR ALTERING A STREAM**

(71) Applicant: Koninklijke Philips N.V., 5656 AG Eindhoven (NL)
(72) Inventor: TALGORN, Elise Claude Valentine, Eindhoven (NL); DJAJADININGRAT, Johan Partomo, Eindhoven (NL); HENDRIKS, Monique, Eindhoven (NL); GEURTS, Lucas Jacobus Franciscus, Eindhoven (NL)
(74) Representative: Philips Intellectual Property & Standards

(57) **Abstract**

Some embodiments are directed to altering a stream comprising audio and/or video. For example, a person detection algorithm may be applied to an input stream to detect at least a first person in the stream from the first person speaking in an audio part of the stream and/or from the first person being visible in a video part of the stream, and a context detection algorithm may be applied to determine a context of the first person in the stream. A filter may be selected in dependence on the detected context an audio and/or video filter.

## Description

### FIELD OF THE INVENTION

The presently disclosed subject matter relates to method for altering a stream comprising audio and/or video, an audio and/or video altering system, and a computer readable medium.

### BACKGROUND OF THE INVENTION

Filtered photos and videos have become ubiquitous on social media like Instagram or Snapchat, making the users look younger, more beautiful, or different in any desired way. In a future where AR glasses and remote communication become a commodity, it is likely that people will filter in a similar fashion their appearance in real time.

For example, US2006268101 discloses a method of digitally adding the appearance of makeup to a videoconferencing participant. The system and method for applying digital make-up operates in a loop processing sequential video frames. For each input frame, there are typically three general steps: 1) Locating the face and eye and mouth regions; 2) Applying digital make-up to the face, preferably with the exception of the eye and open mouth areas; and 3) Blending the make-up region with the rest of the face.

There are many other examples such as this one. A problem with such applications though is that they need to be started and terminated by the user at the time that such would be appropriate. Probably there are situations in which an interaction might achieve its goals quicker if the above filter were applied, however that requires the participants to realize this at the right time and to have the ability to take part in a conversation while at the same time controlling the filter.

There is an opportunity for improving interactions, but a technical tool would be needed to employ and control filters automatically.

### SUMMARY OF THE INVENTION

In an embodiment, an intelligent system uses face and voice filters in video streams, teleconferencing, and AR live overlays to attain subtle changes in people's appearance in order to improve the interaction between people based on context such as the interlocutors (e.g., their age, taste, and biases), the discussion (e.g., topic, goal, and dynamics of the conversation) and the setting (professional, social, romantic). The improved interaction results in a faster or more favorable factual outcome of the interaction, such as reaching a conclusion, understanding a point of view, conveying an emotion.

This invention has benefits, e.g., in the healthcare domain where conveying information with empathy and trust is crucial, as well as in the broader field of social media and day-to-day interactions.

Many people do not realize how the way they look impacts conversations they have, e.g. their chance of getting the job in a job interview. They may not realize that a filter could help them, and even they did, they might not know what filter to apply. It is even less likely that a party to a conversations is aware that the filter needs to be adapted during the conversation. For example, at one point in the conversation conveying empathy when delivering the message is important, but at another a stricter tone may be needed. Subtle changes in the filter can achieve this.

The inventors found that autistic people can be challenged by forming appropriate facial expressions during a conversations. In an embodiment, a filter may form facial expressions for them. This would be impossible to control manually during the conversation.

In an embodiment of a method for altering a stream comprising audio and/or video, a person detection algorithm is applied to the input stream to detect at least a first person in the stream from the first person speaking in an audio part of the stream and/or from the first person being visible in a video part of the stream. For example, face detection algorithms, voice detection algorithm may be employed to detect a person.

Once a person has been detected a context detection algorithm is applied to determine a context of the first person in the stream. A context may comprise information regarding the interaction of the person. For example, speech recognition may be used to recognize the words uttered. From the word uttered a topic of the conversation may be inferred. For example, a purpose or goal of the interaction may be estimated by a machine learning algorithm trained on many streams, e.g., on many video conferencing meetings.

In an embodiment, aspects of the stream, sometimes referred to as traits, are detected which may be collected in a trait vector. For example, traits may include particular words, detected facial expressions and so on. Each trait on their own may not say much about the interaction but as a vector more information is obtained. For example, the vectors can be clustered. The trait vector or the cluster it belongs to may be part of the detected context.

In dependence upon the detected context, an audio and/or video filter may be selected and applied. This has the advantage that an appropriate filter is selected without user intervention being required.

An altering method may be implemented on an altering system or altering device. An altering system is electronic.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium. In aspect is a transitory or non-transitory computer-readable medium comprising instructions which, when executed by a computer, cause the computer to carry out a method according to an embodiment.

### BRIEF DESCRIPTION OF THE DRAWINGS

Further details, aspects, and embodiments will be described, by way of example, with reference to the drawings. Elements in the figures are illustrated for simplicity and clarity and have not necessarily been drawn to scale. In the Figures, elements which correspond to elements already described may have the same reference numerals. In the drawings,
Fig. 1a schematically shows an example of an embodiment of an audio and video system,
Fig. 1b schematically shows an example of an embodiment of an audio and video system,
Fig. 2a schematically shows an example of an embodiment of an audio and video altering system,
Fig. 2b schematically shows an example of an embodiment of an audio and video altering system,
Fig. 3a schematically shows an example of an embodiment of a rule base,
Fig. 3b schematically shows an example of an embodiment of a conversation template,
Fig. 4 schematically shows an example of an embodiment of a method for altering a stream,
Fig. 5a schematically shows a computer readable medium having a writable part comprising a computer program according to an embodiment,
Fig. 5b schematically shows a representation of a processor system according to an embodiment.

### Reference signs list

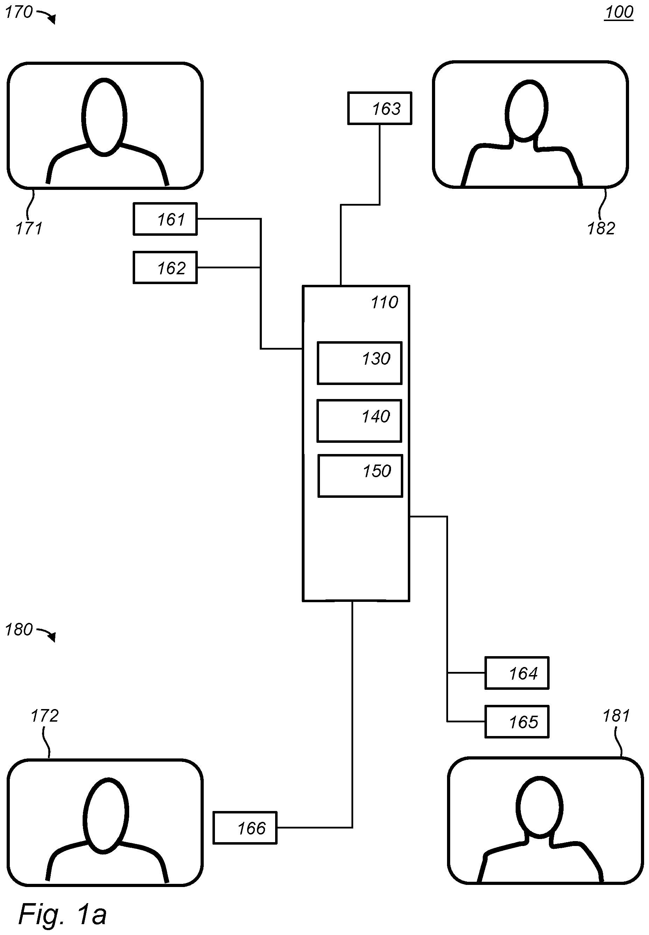

The following list of reference signs refers to Figs. 1a-3b, and 5a-5b, and is provided for facilitating the interpretation of the drawings and shall not be construed as limiting the claims.
- 100, 101: an audio and video system
- 110: an audio and video altering system
- 130: a processor system
- 140: storage
- 150: communication interface
- 161, 164: a camera
- 162, 165: a microphone
- 163, 166: a rendering device
- 167: an augmented reality device
- 170: a first user side
- 171: a first user as recorded
- 172: a first user as rendered
- 173: a first and second person as recorded
- 174: a first and second person as shown
- 180: a second user side
- 181: a second user as recorded
- 182: a second user as shown
- 210, 211: an audio and video stream altering system
- 220: a person detection component
- 221: a face detection component
- 222: a voice detection component
- 225: a personalization database
- 230: a context detection component
- 231: a sentiment detection component
- 232: a goal detection component
- 240: a filter selection component
- 241-243: a filter
- 245: a parameter set
- 249: a parameter modification component
- 250: a filter application component
- 300: a rule base
- 310: a first rule
- 311-312: a first rule criteria
- 320: a second rule
- 321-322: a second rule criteria
- 301: a conversation template
- 330: a first conversation goal
- 331-332: a first filter
- 340: a second conversation goal
- 341-342: a second rule
- 1000: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF THE EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

Numerous psychological studies have been conducted to understand the influence of physical features on subconscious perception. That how one looks impacts how one is perceived seems well-established. Some examples are listed below:
- **Fitness and attractiveness.** People with more attractive faces and fit figures are perceived as more outgoing, socially competent, and powerful, sexually responsive, and intelligent. These trait impressions are accompanied by preferential treatment in a variety of domains, including interpersonal relations, occupational settings, and the judicial system.
- **Babyfaceness.** Adults with babyfaces are perceived to have childlike traits - to be naive, submissive, weak, warm, and honest. Moreover, babyfaced people of all ages and both sexes experience social outcomes that are consistent with their perceived traits. For example, they are passed over for mentally challenging tasks and leadership positions, but favored for jobs that require congeniality. They also are more likely than mature faced peers to be exonerated when charged with intentional crimes, but more likely to be found at fault when charged with negligence.

- **Facial expression of emotion.** People displaying happy faces are perceived as having traits associated with high affiliation and high dominance. When they display angry faces, they are perceived as having traits associated with low affiliation and high dominance. Facial expressions of sadness and fear elicit impressions of traits associated with moderate affiliation and low dominance. 'Poker face', i.e. the ability to contain facial display of emotion, can be beneficial in some situation such as when experiencing anger or social awkwardness.
- **Face familiarity.** People expressed a preference for the job candidate whose face more closely resembled someone who had just treated them kindly, and they avoided a stranger whose face more closely resembled someone who had just treated them irritably. People also expected greater fairness from a professor whose face more closely resembled the prototypical face of a set of professors known to be fair. Familiar faces may be collected, e.g., from social media.
- **Physical posture, height (for men) and weight (for women).** People with a straight posture, tall men, and fit women give a major impression of self-confidence.
- **Age (for women).** There is an ideal window for women to display authority: not too young not too old.
- **Beard (for men).** Bearded men give an impression of higher social status as well as higher aggressiveness.

The literature on this point is extensive, suffices it here to give two representative references: 'Social Psychological Face Perception: Why Appearance Matters' by Leslie A. Zebrowitz and Joann M. Montepare; and 'Babyfaces, Trait Inferences, and Company Evaluations in a Public Relations Crisis', by Gerald J. Gorn, Yuwei Jiang, and Gita Venkataramani Johar.

This situation can be undesirable from a number of viewpoints. On the one hand, the individuals participating in an exchange may prefer to alter their appearance to improve some desired outcome of the exchange. On the other hand, there is also a more general fairness at stake. For example, one may desire that a job interview is decided primarily on job related grounds and not on accidental features. Although filters are in principle available that can change one's appearance in a stream, these are not easily applicable. A user would have to control the filters while participating in an exchange, likely neither achieving a good result from filters for from the exchange. In an embodiment, an automated system is provided in which the appropriate filter which is to be applied is selected and applied automatically. These may be done fully transparently to the participants.

In the remainder the system is described in the context of audio and video. This is not necessary though. In particular, an audio only application is advantageous. One may obtain audio-only embodiments by striking video parts from the embodiments below. For the sake of simplicity these different types of applications are not discussed separately.

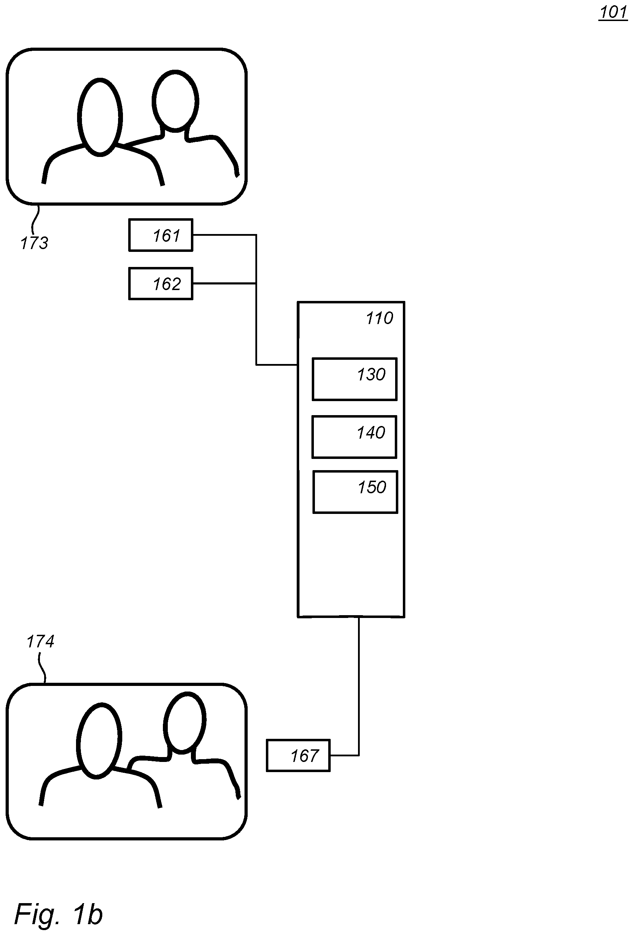

**Figs. 1a** **and** **1b** show an example of an embodiment of an audio and video system 100 and 101 respectively. Fig. 1a shows a video conferencing application.

Shown in **Fig. 1a** is an audio and video system 100 comprising an altering system 110.

System 110 is connected to a first user side 170. The first user has a camera 161, and microphone 162 to record him- or herself, and a rendering device 163, e.g., a monitor, smart phone, etc. The first user as he/she is recorded by camera 161 is shown at 171. A video and audio stream is received from the camera and microphone at first user side 170 at system 110. The rendering device 163 receives a stream for display from system 110.

System 110 is connected to a second user side 180. The second user has a camera 164, and microphone 165 to record him- or herself, and a rendering device 166, e.g., a monitor, smart phone etc. The second user as he/she is recorded by camera 164 is shown at 181. A video and audio stream is received from the camera and microphone at second user side 180 at system 110. The rendering device 166 receives a stream for display from system 110.

System 110 is configured to receive an input stream comprising audio and/or video. In this case the input stream may comprise two video parts and two audio parts. The input stream comprises images of at least two persons participating in the video call. There may be more than two persons.

System 110 analyzes the input stream, e.g., in this example, the video and audio coming from the two sources and on the basis of the analysis selects an appropriate filter. The filter is applied to a person in the input stream to obtain an altered stream. For example, the selected filter may only be applied to a video and/or audio part associated with the detected person.

At the first user side 170, the image 182 that first user sees of the second user is not identical to the second user as recorded 181. At the second user side 180, the image 172 that second user sees of the first user is not identical to the first user as recorded 171. In this example, a filter has been applied to all persons but that is not necessary. For example, only one person may be altered by the system.

Note that the alterations that are made are quite subtle. This is not needed, but is often sufficient. For example, image 171 has been altered to 172 to have slightly more squared shoulders and a subtle incline of the head. Image 181 has been altered to give the person a slightly straighter poise, and more relaxed shoulders. Alterations could also include the filtering / adaptation of movements or a background/context as well.

The cameras are typically 2d cameras; but a camera may also be a 3d camera.

The altering system 110 may be located at various places. For example, it may be located at a location hosted by the first user or by the second user. For example, altering system 110 may be part of the video conferencing software that the first user and/or the second user is running. For example, altering system 110 may be at a location that is independent from either user. For example, altering system 110 may receive the input stream over the internet and transfer the altered stream also over the internet.

For example, the system may be installed at first user side 170. There it may be used to alter second user 181, e.g., to avoid being influenced by some visual or auditive cue. It may instead, or in addition, be used to alter first user 171 himself, e.g., as he/she appears at second user side 180.

Shown in **Fig. 1b** is an audio and video system 101 comprising an altering system 110. Fig. 1b shows an augmented reality application. A camera 161, and microphone 162 record a first person and a second person. The first and second persons as recorded are shown at 173. Microphone 162 records an audio part for the first and second persons shown in at 173, but may also record voice of other persons, in particular the user of an augmented reality device 167.

System 110 is configured to receive an input stream comprising audio and/or video. In this case the input stream may comprise one video part and one audio part. The input stream comprises images of at least two persons participating in the video call. There may be more than two persons. There may be one person.

Like, in Fig. 1a, system 110 analyzes the input stream, selects and applies a filter to alter the appearance or sound of at least one of the persons. In this case both of the shown person have had their appearance changed. The altered stream is sent to an augmented reality device 167 for use by a user of the system. In this case the person using device 167 is not recorded, at least not his appearance. The effect of the system is that a user will see the two persons in a different way than they are in reality. As a result the impact that their appearance may have on the AR user is reduced or eliminated. Camera 161 and microphone 162 may be part of AR device 167.

Other applications are possible. For example, the rendering device of one, or more or all of the participants may be a virtual reality device. An altering system may use face and/or voice filters in video streams, teleconferencing, and AR live overlays to attain subtle changes in people's appearance, e.g., to improve the interaction between people. For example, this may be based on the participant's context, e.g., his/her features (e.g., age, taste, bias), the discussion (e.g., topic, goal, and dynamics of the conversation) and the setting (professional, social, romantic). The optimized interaction enables a faster or more favorable factual outcome of the interaction, such as reaching a conclusion, understanding a point of view, conveying an emotion.

In an embodiment, a filter may be contextual, and alter or remove room audio dynamics or a background. The posture of the person could be adapted. From sitting in front of a computer to being visualized sitting in a more comfortable chair to give a more relaxed environment, or vise-versa.

Embodiments can be applied, e.g., in the healthcare domain where conveying information with empathy and trust is crucial, as well as in the broader field of social media and day-to-day interactions. Applications further include:
- Healthcare (e.g., using AR glasses, or telemedicine, or only applied to audio, e.g., when calling):
- Medical professional giving explanations or instructions to a patient
- Formal or informal caregiver giving comfort to a patient
- Lifestyle or rehabilitation coaching
- Remote expert guidance to e.g., a surgeon, an emergency responder, a field service engineer

Altering system 110 in Fig. 1a and Fig. 1b may comprise a processor system 130, a storage 140, and a communication interface 150.

Storage 140 may comprise local storage, e.g., a local hard drive or electronic memory. Storage 140 may comprise non-local storage, e.g., cloud storage. In the latter case, storage 140 may comprise a storage interface to the non-local storage.

Altering system 110 may communicate internally, with other systems, external storage, input devices, output devices, and/or one or more sensors over a computer network. The computer network may be an internet, an intranet, a LAN, a WLAN, etc. The computer network may be the Internet. The system comprises a connection interface which is arranged to communicate within the system or outside of the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

In altering system 110, the communication interface 150 may be used to send or receive digital data. For example, communication interface 150 may be used to receive parts of the input stream from one or more cameras and microphones.

The execution of altering system 110 may be implemented in a processor system, e.g., one or more processor circuits, e.g., microprocessors, examples of which are shown herein. The processor system may comprise one or more GPUs and/or CPUs. Altering system 110 may comprise multiple processors, which may be distributed over different locations. For example, altering system 110 may use cloud computing.

Fig. 1a shows functional units that may be functional units of the processor system. For example, Fig. 1a may be used as a blueprint of a possible functional organization of the processor system. The processor circuit(s) are not shown separate from the units in these figures. For example, the functional units shown in Fig. 1a may be wholly or partially implemented in computer instructions that are stored at altering system 110, e.g., in an electronic memory of altering system 110, and are executable by a microprocessor of altering system 110. In hybrid embodiments, functional units are implemented partially in hardware, e.g., as coprocessors, e.g., graphics coprocessors, e.g., a graphics processing unit, and partially in software stored and executed on altering system 110. Note that system 110 may be implemented in a single device, ranging from a personal device like a computer, laptop, or smartphone, to a device used by multiple, possibly independent users, e.g., an on-line server.

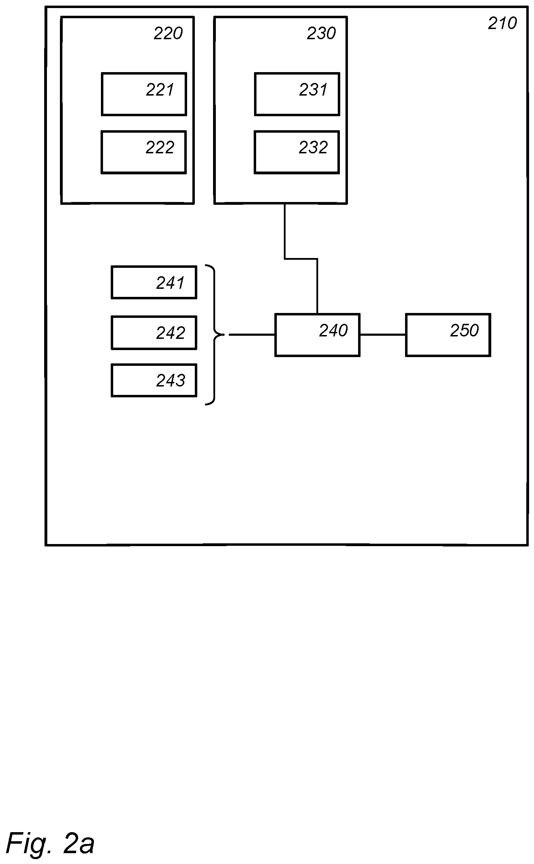

**Fig. 2a** schematically shows an example of an embodiment of an audio and video altering system 210. For example, altering system 210 may be used in the system of Figs. 1a and 1b. For example, altering system 210 may be implemented on a system such as system 110.

Altering system 210 is configured for altering a stream comprising audio and/or video, e.g., according to an embodiment of a method for altering a stream comprising audio and/or video. Altering system 210 comprises a communication input for receiving an input stream comprising audio and/or video, and transferring the altered video stream to a rendering device. The interface is not shown separately in Fig. 2a.

Altering device 210 comprises a person detection component 220 configured to detect at least a first person in the stream. This may be in a video part of the stream, e.g., from the first person being visible in a video part of the stream. This may also, or instead, be in an audio part of the stream, e.g., from the first person speaking.

The first person may be a user of altering system 210. For example, the altering system may be part of a video conferencing or AR software, the user of which may be said first user. The first user may instead be another person, e.g., a person with which the user is interacting. It is convenient that the first person is not only detected in the media, but is also identified. The latter is not necessary though. Identifying the first person, or any other person in the input stream may use voice or image recognition, but may also use other data, e.g., log-in data, etc.

For example, in Fig. 2a, system 210 comprises a face detection component 221, and a voice detection component 222. Conventional algorithms may be installed in these components. It is not needed to detect both in audio and video. For example, one may only detect person(s) in the video, while leaving the audio unaltered. If both are detected, it is advantageous that also a correspondence between a detected person in video and a detected person in audio is established—so that it is known in the system which voice belongs to which person in the video. For example, such an association may be used to apply linked filters to both. For example, a filter that reduces emotional content may be applied to the face of a person as well as to he or she's voice.

The person detection algorithm may be configured to detect at least a second person in the stream; or more than two.

Altering device 210 comprises a context detection component 230 configured to apply a context detection algorithm to the input stream to determine a context of the first person in the stream. A context is information determined from the audio and/or video stream that may be used to select an appropriate filter.

For example, the context detection component may comprise a video classifier, also referred to as a video tagger, e.g., comprising a neural network trained to tag a video, e.g., associate a label from a predetermined multitude of labels to a video segment. The tag may be selected from a set of predetermined tags. Instead of video tagging one may use image tagging instead. Using video or image tagging has the advantage that a known video tagging training pipeline may be used, e.g., trained on a set of video's with known tags. The neural network may be a so-called deep convolutional network.

For example, the context detection component may comprise a sentiment detection component 231 and a goal detection component 232. Other or fewer or more components are possible. A sentiment detection component may run a sentiment detection algorithm. A sentiment analysis algorithm is a machine learning algorithm that analyzes a stream, e.g., video and/or audio, for polarity, from positive to negative. The algorithm may be trained with examples of emotions in a stream.

A sentiment may be expressed as a number on an interval, e.g., from 0 to 1, or so. More extensively, a classifier may be trained to tag particular emotions. Other examples include the personality, or mental state of detected person.

The context may be related only to one detected person in the stream, e.g., the first person, but this is not necessary. For example, the person detection algorithm may be configured to detect at least a second person in the video stream, the context detection algorithm being configured to classify an interaction between the first person and the second person. For example, the context detection algorithm may be configured to detect a purpose of an interaction between the first person and the second person. For example, a purpose may be transfer information, e.g., to teach, to inform, a purpose may be to convince, and so on. Such a purpose may be gleaned from cues in the stream. Even if subtle such cues as intonation, eye movement, and so on, may be picked up by a machine learning algorithm.

Context that can be detected from a stream may further include a location. For example, the context detection algorithm may determine if a detected person is inside or outside. The context detection algorithm may determine the number of persons in the stream, e.g., in a location.

Advantageously many detectable aspects can be combined in a context. For example, one may detect multiple traits in a video part of audio part. The set of detected traits may be comprised in the context and filter selection may be dependent on it. For example, the traits can be combined in a vector, or label cloud, or the like. Further machine learning can be applied to it. For example, vector clustering can be applied to map such collections, e.g., vectors to a set of distinct classes.

For example, a trait may be a word detected in speech recognition or a facial expression in facial recognition, and so on. The vectors can be clustered. The trait vector or the cluster it belongs to may be part of the detected context.

For example, one or more video and/or audio classifiers may be configured to detect a collection of multiple words, facial expressions, and/or objects. Even though any one individually may not be sufficiently predictive they can be combined. For example, if the words, jobs, experience, study and so one are detected along with serious expressions, one may conclude that a job interview is ongoing. Many different trait collections, e.g., vectors, may be mapped to this one class. A filter may then be triggered that is appropriate for a job interview. For example, the interlocutors may be presented with a filter that make interviewees less distinct from each other to avoid being overly influenced by superficial appearance. On the other hand at the side of the interviewee, beauty or facetiousness filters may be selected. A user can preselect an initial context in before a conversation, e.g., a meeting; the initial context can be adapted in an embodiment by the system.

Altering device 210 comprises a filter selection component 240. In Fig. 2a, three filters are shown: filters 241-243. These filters may apply to video, to audio, or to both. A filter transforms the appearance or sound of a detected person in a video part. There may be two filters or more than three filters, etc. Filter selection component 240 is configured to select in dependence on the detected context an audio and/or video filter.

For example, a filter may be selected based on the sentiment detection and/or goal detected. The filter selection may depend instead or in addition on other data, not necessarily determined from the stream. For example, the filter selection component 240 may be configured to retrieve further context data associated with the input stream from an electronic information system, and to select and/or adapt the filter in dependence upon the further context data. Such further data could for example, be calendar data, e.g., information regarding the type of meeting. Further data may also be obtained from a database. For example, from an electronic patient dossier, the selection component may retrieve life expectancy or whether treatment is palliative or curative. Such information may be input for a rule that selects one filter over another. Such information may also be used to select a conversation template.

Many types of filters are available and may be used in an embodiment. A video filter is configured to change a visual appearance of a person in the stream on a rendering device. This may be the detected first person on the rendering device of the second person. Changing someone's appearance may be done locally, e.g., for incoming video to avoid getting distracted. Changing someone's appearance may be done locally, e.g., for outgoing video to change one's impression. A filter may also be applied non-locally. The filter may be applied to one detected person in particular, but might also be applied to more, or all persons.

An audio filter is likewise, except that it is configured to change an auditory appearance of a person, e.g., of the first person on a rendering device of the second person.

A filter may be a hybrid altering both video and audio.

A filter may be based on existing faces. For example, a filter may comprise a GAN trained style transfer function. An input to the filter may be a face of an existing person, so that it's appearance or even its way of moving his/her facial muscles is transferred. For example, the existing face may be an authority figure to increase authoritarian qualities.

The filter may be one of many existing beauty filters, e.g., to remove skin blemishes, etc.

A filter may be an emotion filter, to reduce or increase the emotional content. A filter may be a laugh filter, also referred to as a facetiousness filter, to detect and remove laughing and smiles from the stream. Not everybody is able to adjust his facial expression in a way that suits the situation and an embodiment may help such people. The filter may also form other facial expressions as is appropriate in a conversation, e.g., as indicated by a rule base.

A filter may be configured to remove yawning, to remove gap words, and so on. A filter may be configured to increase or decrease a sentiment in the video stream. A filter may be configured to reduce or remove coughing, e.g., when somebody is ill. Also it could eliminate reading of text when somebody is doing a second task during a meeting. For example, reading a mail or looking at an image. The eye movements could be filtered out then. A filter or adaptation algorithm may be configured to change movement to more confident moments or fewer movements.

Context detection, in particular emotional context, can use a sensor. For example, a heart rate (HR) sensor or a skin conductance response (SCR) sensor may be used to estimate a user's emotional context.

The way a first person's appearance is altered may depend on a detected second person. For example, a filter may change for different patients, e.g., change a suit to a lab coat, or vice versa.

The way a person talks, e.g., its tone of voice, pitch, speed, pauses, choice of words, and so on, influence the way that a message is received by an audience. For example, software is known that is configured to remove unwanted pauses in speech. Such software may be employed in circumstances in which fewer unwanted pauses is called for.

A filter may recognize inflections, such as the cadence and pitch at the end of sentences, and modify the inflection, for example, leave a little extra space at the end of sentences, and/or removing nervous utterances and gap-words, and/or change a dialect.

Emerging machine learning systems are able to modify a video adding, deleting, or changing the words coming right out of somebody's mouth in order to adapt and optimize the message. Once one or more appropriate filters have been selected, they may be applied by a filter application component 250 in altering system 210.

In an embodiment, filter selection may be repeated and/or filter parameters may be changed repeatedly. For example, altering system 210 may determine a subsequent change in the context of the first person in the video stream. In dependence thereon the video and/or audio filter selection and/or parameters thereof may be changed. For example, altering system 210 may measure the effectiveness of a conversation in the stream. Did a participant understand the message? This information may be used to change filter. In an embodiment, the measured effectiveness may be recorded and used to change the selection component.

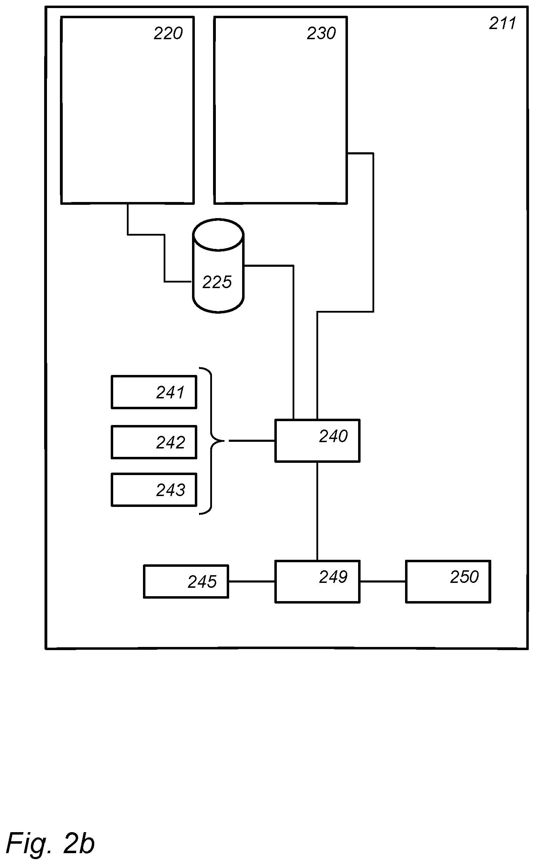

**Fig. 2b** schematically shows an example of an embodiment of an audio and video altering system 211. System 211 is similar in most aspects to system 210. System 211 may also be implemented in system 110. System 211 illustrates two optional improvements. Either one of these improvements may be omitted and/or introduced in system 210.

System 211 comprises a personalization database 225 comprising personalization information. In addition to detecting a person in a stream, e.g., detecting the pixels where the person is visible, the person is also identified. The person can now be modified in a manner that is specific to that person. For example, if a particular person is identified, corresponding personalization information can be retrieved from database 225 for the particular person. The filter selection may then depend on the personalization information. For example, the personalization information may comprise filters, filter parameters and/or a selection mechanism. For example, the personalization information may comprise a rule, a rule base, a conversation template, etc. An advantage is that filtering can be tailored to a particular individual. The person identified may be the owner of the altering system.

System 211 comprises a parameter modification component. In addition to selecting a particular filter, the parameters of the filter are also tuned. This is advantageous, e.g., in embodiments that track effectiveness or the achievement of goals. For example, if a conversation goal is to inform someone, but measurement shows that the opposite participant is confused, then a parameter of a convince person filter may be increased.

In an embodiment, the method comprises
1. sensing the purpose of an interaction between two (or more persons) or the aim of one of the persons, e.g., the sender, and possibly a discrepancy with how the message was received ― e.g., the sender wants to convince a person, but the receiving end is showing doubt,
2. adapting the visual and audio appearance of the sender to maximize chances to reach the purpose of the session - e.g., in a bad news conversation, given by a not-so-emphatic doctor, the tone of voice is modified to sound more empathetic, the facial features of the doctor are modified to be softer and more familiar to the patient, facial display of emotion of the doctor is enhanced.

An embodiment of an altering system, e.g., altering system 110, 210, or 211 can have benefits in, say, the healthcare domain where conveying information with empathy and trust is important, as well as in the broader field of social media and day-to-day interactions.

In an embodiment,
1. A camera and audio recording system and a display system (screen or AR or VR)
2. An analysis part to analyze and classify in real time the interaction between 2 or more users, including one or more of
   a. speech recognition and/or content analysis of the discussion
   b. emotion detection (e.g., facial emotion recognition, tone of voice, HR and/or SCR sensor)
   c. user and audience identification. Possibly including a history of interaction patterns and facial preferences via e.g., social media
   d. location recognition and agenda data to categorize context
3. An altering part to automatically overlay on-the-fly, possibly subtle, changes on user(s) physical image and/or to modify the user(s) speech based on the classification of the interaction.

Below a number of examples are given of filters that can be selected in certain contexts, e.g., to assist in certain goals:
**a. Need to convey warmth, empathy** e.g., caregivers, nurses. babyface filter + emotion-enhancing filter + face-familiarity filter (with someone who helped the audience recently or the archetype of the 'good doctor')
**b. Need to convey honesty,** e.g., conveying a message difficult to be trusted in public relations, or a salesman talking to a customer that shows signs of diffidence. babyface filter + face-familiarity filter (with someone whom the audience listens to as inferred from e.g., social media)
**c. Need to convince,** e.g., in a pitch, or a salesman talking to a customer who arguments rationally against the sale, a doctor to a patient, a teacher. maturity-filter + face-familiarity filter + posture/stature filter + fancy-clothes filter
**d. Need to win an argumentation,** e.g., in a debate where several parties do not agree, in a decision making meeting. poker-face filter + posture/stature filter + maturity-filter + fancy-clothes filter + beard filter
**e. Need to convey self-confidence,** e.g., in a pitch, at a job interview. happy-face filter + posture/stature filter + fancy-clothes filter
**f. Need to blend in,** e.g., at a job interview, when entering a new social or professional circle. Face-familiarity filter + happy face filter + same-age filter
**g. Need to ask for help, e.g., support in a difficult task at work.** babyface filter + emotion-enhancing filter + face-familiarity filter (with someone for whom the audience cares like a relative),
**h. Need to seduce, e.g., when dating,** face-familiarity filter (with someone who the audience liked and has good memories of) + same-age filter

Beautifying filters might be applied in all these cases on top of the other filters as they are almost always beneficial. The filters should be tuned to cultural differences, i.e. to the level of emotional display that is the norm in a given culture or the typical facial features in an ethnic group. Preferably, the filters are subtle enough so that from one situation to another the person looks only slightly different but is still completely recognizable.

A particular interesting class of filters are those that increase or change to sentiment, e.g., the emotional content. A number of filters described herein can modify the display of emotions:
- **emotion-enhancing filter:** if the user has a low display of emotions (poker-face), detect emotions (face recognition, speech, HR, SCR) and enhance slightly the display of positive and negative emotions (e.g., smiling, frowning, etc.). Enhance intonations in pitch.
- **poker-face filter:** if the user has a high display of emotions, slightly erase facial display of emotion (e.g., smiling, frowning, etc.). Diminish intonations in pitch, remove nervous utterances.
- **happy-face filter:** if the user does not smile a lot, slightly enhance smiling and reduce display of negative or awkwardness emotions e.g., frowning, worry eyebrows, etc. Enhance happy intonations in speech (e.g., go up at the end of a sentence), remove nervous utterances.

The emotional filters are preferably applied to a level that is tailored to the audience display of emotion: for example, if the audience displays lots of emotions, the filters should be tuned so that the first user also shows lots of emotions i.e. a high emotion-enhancing and happy-face filters and low poker-face filter.

The filters described herein can also modify the constant facial/body traits:
- **babyface filter:** larger head, larger curved forehead, slightly lower facial elements (eyes, nose, mouth), larger and rounder eyes, smaller and shorter nose, rounder cheeks, smaller chin. Soften voice.
- **face-familiarity filter:** detect in the interaction history of the audience an acquaintance with whom they had positive interaction (e.g., a large number of positive pictures on social media), possibly in an interaction similar to the interaction that the audience has with the first user (e.g., an authority figure if the first user is trying to convince or pitch, a friendly figure if the first user is trying to integrate a group). The acquaintance can be a friend, a relative, a colleague, or a famous person that the audience does not know personally but actively follows. The filter modifies slightly the traits and voice of the first user to resemble these of the acquaintance of the second user.
- **maturity filter:** make the first user slightly older (3-5 years). Make tone of voice slightly lower.
- **same-age filter:** make the first user slightly older or younger to approach the age of the audience.
- **posture/stature filter:** make shoulders up, straighter back, heads up.
- **fancy-clothes filter:** whiten white shirts, remove fold lines and small marks, smoothen hair, etc.
- **beard filter:** adding or removing a facial hair.

Other changes introduces by a filter may include skin adaptions, adding hair, removal of piercings or tattoos, altering make-up, and the like. In an embodiment, the system adapts in real time the choice of words to the situation to optimize the interaction i.e. replaces some words in the speech. In an embodiment, the system is an artificial intelligence that senses the effect that the filtering has on the interaction i.e. emotional reaction of the audience, progress in the discussion, and uses a feedback loop to optimize the filtering process. The system also collects data on a multitude of users using the filters and learns which filters work best for different categories of interaction.

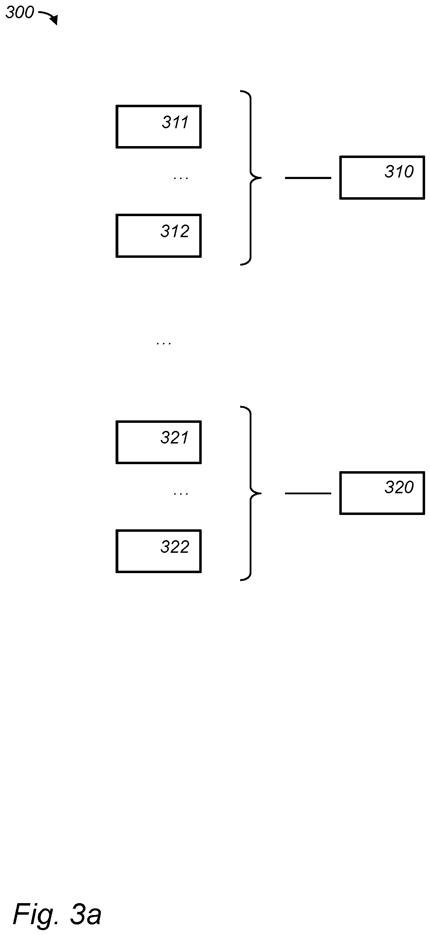

**Fig. 3a** schematically shows an example of an embodiment of a rule base 300. The rule base comprises multiple rules that each associates a particular set of detected contexts with an appropriate filter or filter settings. Shown are two rules: rule 310 and rule 320. A rule may have one or more antecedents. For example, Fig. 3a shows antecedents 311 and 312 for rule 310 and antecedents 321 and 322 for rule 320. The two rules may each have as a consequent an appropriate rule.

For example, antecedents may comprise that a second person is detected and that a teaching interaction seems to be ongoing. The consequent of the rule may be to select a rule that improves trust and understanding.

It may be that multiple rules are triggered by the same stream. A conflict resolution mechanism may be used to resolve this. For example, filters may have a priority value that determines which get precedence. On the other hand, many filters are not mutually exclusive and more than one can be applied together. Such information can be recorded in graph, e.g., with filters as the nodes and the edges indicating compatibility. Precedence values may be indicated at the edges and/or at the nodes.

When multiple nodes are triggered a maximal covering subject to the conditions indicates a possible resolution to the conflict.

For example, an altering system may use a rule base that associates one or more of a detected person or persons, and detected context to a filter, selecting an audio and/or video filter comprises applying the rule base.

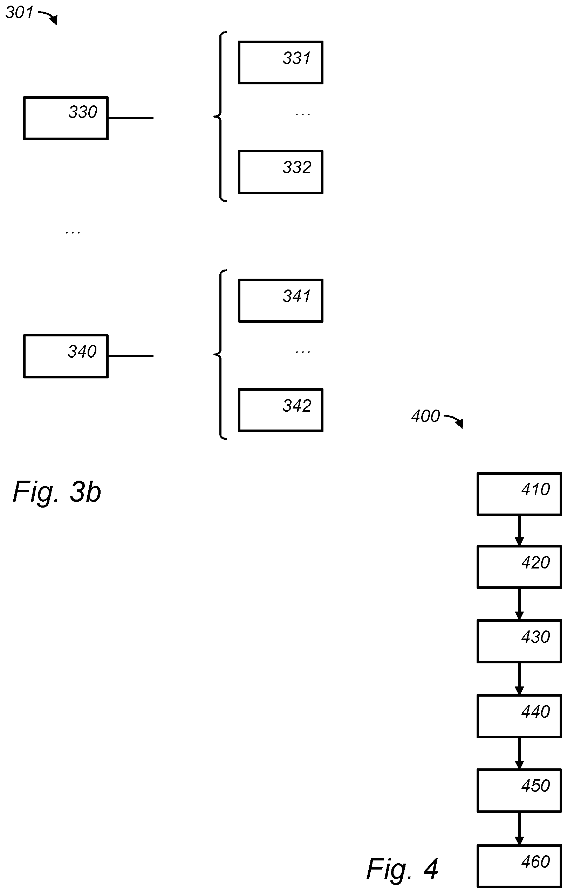

**Fig. 3b** schematically shows an example of an embodiment of a conversation template 301. The template comprises multiple conversation goals that are to be achieved. The order in which the goals are to be achieved is predetermined. In this case a linear order is imposed. Shown are two goals: goal 330 and goal 340. Goal 330 is to be achieved before goal 340. When a reached goal has been detected in the communication, the next goal could become active. More elaborate structures, e.g., in the form of direct anti-cyclic graphs are possible.

Each goal has its own filtering system. In this case, goal 330 has filters 331 and 332, goal 340 has filters 341 and 342. Instead of having particular filters assigned to goal, a goal may also have an associated rule base.

For example, a conversation template for conveying a message to a patient, e.g., of a tumor, a first goal may be to handle the emotional response of the patient. This might be goal 330. Once that goal is achieved and the patient can be reached again, a second goal may be to discuss treatment options. This might be goal 340. For the first goal filters may be used the emphasis qualities while for the second goals a firmer tone might be used.

In the various embodiments of an altering system, the communication interface may be selected from various alternatives. For example, the interface may be a network interface to a local or wide area network, e.g., the Internet, an application interface (API), etc.

The altering device may have a user interface, which may include well-known elements such as one or more buttons, a keyboard, display, touch screen, etc. The user interface may be arranged for accommodating user interaction for performing initiating communication, configuring rule bases, and so on.

Storage 140 may be implemented as an electronic memory, say a flash memory, or magnetic memory, say hard disk or the like, or optical memory, e.g., a DVD. Storage 140 may comprise multiple discrete memories together making up storage 140. Storage 140 may comprise a temporary memory, say a RAM. In the case of a temporary storage 140, storage 140 may be associated with a retrieving device to obtain data before use and to store the data in the storage, say by obtaining them over an optional network connection (not shown).

Typically, the altering system comprises a microprocessor which executes appropriate software stored at the system; for example, that software may have been downloaded and/or stored in a corresponding memory, e.g., a volatile memory such as RAM or a non-volatile memory such as Flash. Alternatively, the altering device may, in whole or in part, be implemented in programmable logic, e.g., as field-programmable gate array (FPGA). An altering system may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc.

Components may be implemented as one or more circuits. The circuits may be a processor circuit and storage circuit, the processor circuit executing instructions represented electronically in the storage circuits. A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

**Fig. 4** schematically shows an example of an embodiment of a method 400 for altering a stream. The method may be computer-implemented and comprises:
- receiving (410) an input stream comprising audio and/or video,
- applying (420) a person detection algorithm to the input stream to detect at least a first person in the stream from the first person speaking in an audio part of the stream and/or from the first person being visible in a video part of the stream,
- applying (430) a context detection algorithm to determine a context of the first person in the stream,
- selecting (440) in dependence on the detected context an audio and/or video filter,
- applying (450) the selected filter to a detected person in the input stream to obtain an altered stream, and
- transferring (460) the altered video stream to a rendering device.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 400. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

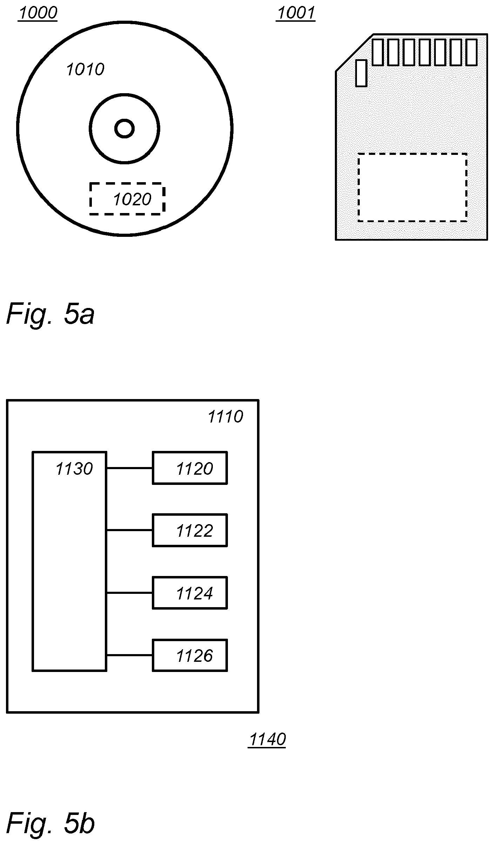

**Fig. 5a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an altering method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of altering.

**Fig. 5b** shows in a schematic representation of a processor system 1140 according to an embodiment of an altering system. The processor system comprises one or more integrated circuits 1110. The architecture of the one or more integrated circuits 1110 is schematically shown in Fig. 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the altering system may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented method (400) for altering a stream comprising audio and/or video, the method comprising
- receiving (410) an input stream comprising audio and/or video,
- applying (420) a person detection algorithm to the input stream to detect at least a first person in the stream from the first person speaking in an audio part of the stream and/or from the first person being visible in a video part of the stream,
- applying (430) a context detection algorithm to determine a context of the first person in the stream,
- selecting (440) in dependence on the detected context an audio and/or video filter,
- applying (450) the selected filter to a detected person in the input stream to obtain an altered stream, and
- transferring (460) the altered video stream to a rendering device.

2. A method as in Claim 1, comprising determining a subsequent change in the context of the first person in the video stream, and adapting in dependence thereon the video and/or audio filter selection and/or parameters thereof.

3. A method as in any one of the preceding claims, wherein the context detection comprises a sentiment detection.

4. A method as in any one of the preceding claims, comprising
- retrieving further context data associated with the input stream from an electronic information system, selecting and/or adapting the filter being in dependence upon the further context data.

5. A method as in any one of the preceding claims, comprising
- retrieving preference data for a detected user, the filter being selected in dependence on the preference data.

6. A method as in any one of the preceding claims, wherein the person detection algorithm is configured to detect at least a second person in the video stream, the context detection algorithm being configured to classify an interaction between the first person and the second person.

7. A method as in Claim 6, wherein
- the video filter is configured to change a visual appearance of the first person on a rendering device of the second person and/or a further person, and/or
- the audio filter is configured to change an auditory appearance of the first person on a rendering device of the second person and/or a further person.

8. A method as in any one of the claims 6-7, wherein the context detection algorithm is configured to detect a purpose of an interaction between the first person and the second person.

9. A method as in any one of the preceding claims, wherein
- the audio filter is configured to modify a tone of voice
- the video filter is configured to modify facial features

10. A method as in any one of the preceding claims, wherein the audio filter and/or video filter are configured to increase or decrease a sentiment in the video stream.

11. A method as in any one of the preceding claims, wherein the video stream is received, and the altered video stream is transferred to an augmented reality system, a virtual reality system, and/or a teleconferencing system.

12. A method as in any one of the preceding claims, comprising identifying a person in the video.

13. A method as in any one of the preceding claims, comprising receiving the input video stream from a video camera and microphone.

14. A method as in any one of the preceding claims, comprising
- retrieving a rule base, the rule base associating one or more of a detected person, detected context to a filter, selecting an audio and/or video filter comprises applying the rule base.

15. An audio and/or video altering system, the system comprising
- a communication interface configured for
- receiving an input stream comprising audio and/or video, and
- transferring an altered video stream to a rendering device, and
- a processor system configured for
- applying a person detection algorithm to detect at least a first person in the stream from the first person speaking in an audio part of the stream and/or from the first person being visible in a video part of the stream,
- applying a context detection algorithm to determine a context of the first person in the stream,
- selecting in dependence on the detected context an audio and/or video filter,
- applying the selected filter to a detected person in the input stream to obtain an altered stream.

16. A transitory or non-transitory computer readable medium (1000) comprising data (1020) representing instructions, which when executed by a processor system, cause the processor system to perform a method according to any one of claims 1-14.
